# Europäisches Patentamt
# European Patent Office
# Office européen des brevets

(19)

(11) Numéro de publication: **0 159 242**
**B1**

(12) **FASCICULE DE BREVET EUROPÉEN**

(45) Date de publication du fascicule du brevet:
22.07.87

(51) Int. Cl.⁴: **E 21 B 17/042**

(21) Numéro de dépôt: **85400557.6**

(22) Date de dépôt: **22.03.85**

(54) Joint pour tubes d'acier, outillage et procédé pour obtenir une plus grande précision.

(30) Priorité: **22.03.84 FR 8404432**

(43) Date de publication de la demande:
**23.10.85 Bulletin 85/43**

(45) Mention de la délivrance du brevet:
**22.07.87 Bulletin 87/30**

(84) Etats contractants désignés:
**AT BE DE GB IT LU NL SE**

(56) Documents cité:
**BE-A-702 480**
**FR-A-2 178 948**
**FR-A-2 349 095**
**FR-A-2 384 322**
**FR-A-2 518 635**

(73) Titulaire: **VALLOUREC Société Anonyme dite., 7, place du Chancelier Adenauer, F-75116 Paris (FR)**

(72) Inventeur: **Plaquin, Bernard, 15, Rond Point des Acacias, F-59620 Aulnoye (FR)**
Inventeur: **Fradin, Louis, Allée des Grands Chênes, F-59620 Aulnoye (FR)**

(74) Mandataire: **Nony, Michel, Cabinet Nony 29, rue Cambacérès, F-75008 Paris (FR)**

LIBER, STOCKHOLM 1987

EP 0 159 242 B1

## Description

La présente invention est relative à un joint fileté pour tubes d'acier, utilisable notamment dans l'exploitation pétrolière, à un procédé de fabrication de ce joint et un outillage pour la mise en oeuvre de ce procédé.

Du FR-A-2178948 on connait déjà des joints filetés pour tubes d'acier destinés à l'exploitation pétrolière qui comportent un élément femelle muni d'un filetage tronconique et d'une butée de limitation de vissage à l'extrémité interne du filetage, ainsi qu'un élément mâle muni d'un filetage tronconique externe susceptible de s'engager dans le filetage tronconique interne de l'élément femelle, et d'une butée d'extrémité destinée à coopérer avec la butée de limitation de vissage de l'élément femelle.

Lorsque de tels joints ne sont pas usinés dans des extrémités de section de tubes qui ont été surépaissis par forgeage ou par refoulement, il arrive souvent, notamment pour des tubes de petit diamètre et de faible épaisseur, que les butées de limitation de vissage qui sont situées à l'extrémité de l'élément mâle et à l'intérieur du filetage de l'élément femelle ont des sections trop faibles pour pouvoir supporter les efforts auxquels elles sont soumises.

C'est ainsi par exemple que, pour un tube d'acier de 60 mm de diamètre et de 5,5 mm d'épaisseur, la largeur de la butée ne peut être que de 3 à 3,5 mm ce qui limite à environ 150 mètres kilos le couple que l'on peut exercer sur ce joint au-delà du contact des butées sans provoquer des déformations permanentes compromettant l'interchangeabilité des éléments.

Compte-tenu des diverses conditions d'utilisation des tubes munis de tels joints (traction ou compression axiale et une pression intérieure ou extérieure) il est nécessaire d'assurer un certain monolithisme du joint en appliquant une précontrainte déterminée au niveau des butées de limitation de vissage.

De plus, il est, pour ces mêmes raisons, nécessaire d'assurer un frettage entre les éléments mâle et femelle, frettage que l'on obtient par l'utilisation de filetages coniques.

C'est ainsi que le couple de vissage d'un joint de ce type est égal à la somme du couple nécessaire au frettage, (c'est-à-dire au forçage par vissage de l'élément mâle dans l'élément femelle jusqu'à ce que l'extrémité de l'élément mâle vienne en butée contre la butée interne de l'élément femelle), et du couple par lequel l'extrémité de l'élément mâle est appliquée axialement contre la butée de l'élément femelle.

Il est également connu que, compte-tenu des tolérances de fabrication, le couple de frettage nécessaire pour amener l'extrémité de l'élément mâle contre la butée de l'élément femelle peut varier dans un rapport d'au moins 1 à 4 suivant le type de joint. Il en résulte que le couple restant qui permet d'appliquer axialement l'extrémité de l'élément mâle contre la butée de l'élément femelle est susceptible de varier dans de très larges limites.

Il arrive même dans certains cas, notamment pour des tubes de faible diamètre que, compte-tenu des tolérances d'usinage des filetages, l'on aboutisse à une plage de couple de vissage qui est très limitée, une faible augmentation des tolérances pouvant même entraîner que dans certains cas cette plage de couple soit nulle.

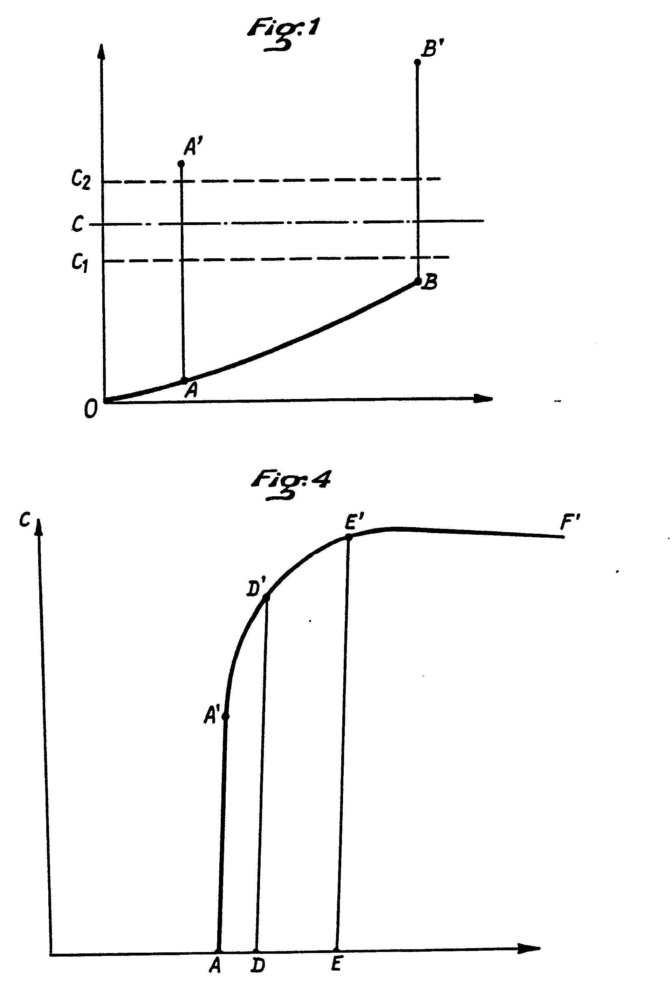

Pour mieux faire comprendre ce phénomène on a représenté sur la figure 1 une courbe de vissage d'un joint de ce type, les abscisses représentant l'excès de diamètre de l'élément mâle par rapport au diamètre de l'élément femelle au moment où l'extrémité de l'élément mâle vient en butée contre la butée de l'élément femelle, les ordonnées représentant le couple appliqué au joint.

Les courbes OAA' et OBB' correspondent à des joints du même type mais dont les filetages se situent aux extrémités des tolérances d'usinage, la courbe OAA' correspondant à un joint pour lequel l'extrémité de l'élément mâle vient s'appliquer contre la butée de l'élément femelle après un faible frettage de l'élément mâle dans l'élément femelle, alors que la courbe OBB' correspond à un joint pour lequel l'extrémité de l'élément mâle ne vient s'appliquer contre la butée de l'élément femelle qu'après un frettage important de l'élément mâle dans l'élément femelle.

La courbe OAB de la figure 1 correspond à l'augmentation du couple nécessaire pour obtenir un frettage croissant avant que l'extrémité de l'élément mâle ne vienne s'appliquer contre la butée de l'élément femelle.

On voit que cette courbe croît relativement lentement. Far contre, lorsque l'extrémité de l'élément mâle vient porter contre la butée de l'élément femelle, le couple croît très rapidement sans augmentation notable du frettage en raison du fait qu'il ne se produit alors qu'une faible rotation de l'élément mâle par rapport à l'élément femelle.

Les points A' et B' correspondent aux couples pour lesquels il se produit sur l'extrémité de l'élément mâle et sur la butée de l'élément femelle des déformations plastiques qui rendent les joints inutilisables ou du moins non interchangeables.

On remarque que le couple qui est appliqué sur le joint, à partir du moment où l'extrémité de l'élément mâle est en contact avec la butée de l'élément femelle, et ce, jusqu'à ce que des déformations graves interviennent sur ces surfaces de butée, est sensiblement le même quelles que soient les tolérances de fabrication qui existent au niveau des filetages. Cela se matéralise sur la figure 1 par le fait que les parties de courbe AA' et BB' ont sensiblement la même longueur.

C'est à partir de ces courbes OAA' et OABB' que l'on peut déterminer le couple de serrage que l'on doit appliquer au joint, ce couple se situant entre les limites C1 et C2.

On remarque sur la figure 1 que le joint donnant lieu à la courbe OAA' correspond pour un couple de serrage donné, à un frettage faible et à une pression importante sur les butées de limitation de vissage.

Au contraire, le joint donnant lieu à la courbe OABB' correspond, pour un serrage à un couple donné, à un frettage important et à une pression faible sur les butées de limitation de vissage.

On comprend dans ces conditions que pour déterminer une zone de couples de serrage qui soit suffisamment large tout en assurant à la fois un frettage suffisant au niveau filetage et une pression axiale suffisante sur les butées de limitation de vissage, il y a intérêt à rapprocher l'un de l'autre les points A et B de la courbe de la figure 1, c'est-à-dire à positionner le plus précisément possible la butée de chacun des éléments du joint par rapport à son filetage.

La présente invention a pour objet un nouveau joint du type précité qui présente l'avantage de posséder sur chacun de ses éléments une butée de limitation de vissage qui d'une part est positionnée de manière précise par rapport au filetage et d'autre part dont la résistance mécanique a été accrue par un traitement d'écrouissage à froid.

La présente invention a pour objet un joint fileté pour tubes d'acier, destiné notamment à être utilisé dans l'industrie pétrolière, du type comportant un élément femelle muni d'un filetage tronconique interne à l'extrémité duquel se trouve située une butée de limitation de vissage, et un élément mâle muni à son extrémité d'un filetage tronconique externe correspondant à celui de l'élément femelle et d'une butée de limitation de vissage dont la forme correspond à celle de l'élément femelle, caractérisé par le fait que les butées de l'élément mâle et l'élément femelle ont chacune été usinées par déformation à froid et écrouissage à l'aide d'un outil muni d'un filetage susceptible de s'engager dans ou sur le filetage de l'élément correspondant.

La présente invention a également pour objet un nouveau procédé pour la fabrication de joints tels que définis ci-dessus, ce procédé étant caractérisé par le fait que l'on procède à un premier usinage de l'élément mâle et l'élément femelle du joint en procédant à l'usinage de finition des filetages et en conservant seulement à l'état ébauché les surfaces de butée de limitation de vissage; que l'on engage un calibre fileté mâle sur le filetage de l'élément femelle et un calibre fileté femelle sur le filetage de l'élément mâle, ces deux calibres étant chacun muni d'un repère disposé de telle manière que lorsque ces deux calibres filetés sont vissés à la main l'un dans l'autre les deux repères en question sont situés sur une même génératrice; que l'on reporte sur l'élément femelle du joint le repère du calibre mâle et l'on reporte sur l'élément mâle le repère du calibre femelle; que l'on engage dans l'élément femelle un mandrin fileté mâle en acier à hautes caractéristiques mécaniques, ce mandrin ayant à son extrémité la forme que doit avoir la butée de limitation de vissage de l'élément femelle, et ledit mandrin mâle étant muni sur sa périphérie d'un repère corespondant au repère du calibre femelle précité lorsque ce dernier est engagé et vissé à la main sur ledit mandrin; qu'à l'aide d'une machine susceptible d'exercer un couple élevé, on entraîne le mandrin fileté mâle en rotation par rapport à l'élément femelle du joint de manière à amener le repère du mandrin à une distance prédéterminée au-delà du repère de l'élément femelle en écrouissant la surface constituant la butée de limitation de vissage de l'élément femelle à l'aide de l'extrémité du mandrin mâle; que l'on dévisse le mandrin mâle de l'élément femelle; et que l'on réalise sur l'élément mâle une opération de même nature à l'aide d'un mandrin femelle qui est muni d'un repère correspondant à celui du calibre mâle précité et qui est vissé à force sur l'extrémité de l'élément mâle jusqu'à ce que le repère du mandrin soit amené à une distance prédéterminée au-delà du repère de l'élément mâle.

La présente invention a également pour objet un outillage destiné pour mettre en oeuvre le procédé défini ci-dessus, cet outillage étant caractérisé par le fait qu'il est constitué par un calibre mâle et un calibre femelle, munis de filetages susceptibles de s'engager sur les filetages de l'élément femelle et de l'élément mâle du joint, chacun de ces calibres comportant un repère disposé de manière telle que lorsque les deux calibres sont vissés manuellement l'un sur l'autre ces deux repères se trouvent sur une même génératrice, ledit outillage comportant en outre un mandrin mâle et un mandrin femelle comportant des filetages et des surfaces de travail correspondant aux filetages et aux surfaces de butées de limitation de vissage de l'élément mâle et de l'élément femelle, chacun de ces mandrins étant muni d'un repère disposé de telle manière que lorsque le mandrin mâle est vissé dans le calibre femelle précité, et lorsque le mandrin femelle est vissé sur le calibre mâle précité, les repères des calibres et des mandrins se trouvent sur une même génératrice.

Dans le but de mieux faire comprendre l'invention on va en décrire maintenant à titre d'illustration et sans aucun caractère limitatif un mode de réalisation pris comme exemple et représenté sur le dessin annexé.

Sur ce dessin:
- la figure 1 est une courbe représentant le couple exercé sur le joint en fonction de l'interférence des filetages de l'élément mâle et de l'élément femelle,
- la figure 2 est une vue en coupe partielle d'un calibre mâle selon l'invention,
- la figure 3 est une vue en coupe partielle d'un calibre femelle selon l'invention,
- la figure 4 est une courbe représentant le couple nécessaire pour obtenir une rotation donnée de l'élément mâle par rapport à l'élément femelle,
- la figure 5 est une vue en coupe lors de l'usinage final par le mandrin mâle de la butée de limitation de vissage de l'élément femelle,

- la figure 6 est une vue en élévation du mandrin utilisé sur la figure 5,

- la figure 7 est une vue en coupe du mandrin permettant de réaliser l'usinage final de la butée de limitation de vissage de l'élément mâle du joint, et

- la figure 8 représente les couples de vissage en fonction de l'interférence des filetages des joints conformes à l'invention.

Les explications concernant la figure 1 ont été données à l'occasion de la description de l'état de la technique.

On a schématiquement représenté en coupe sur la figure 2 l'élément femelle 1 qui est muni d'un filetage interne 2 et d'une butée de limitation de vissage 3. Dans le mode de réalisation représenté, cette butée de limitation de vissage 3 est une butée plane perpendiculaire à l'axe du tube, mais il va de soi que cette butée pourrait être de forme différente, elle pourrait être par exemple conique, concave ou convexe ou même présenter une forme plus complexe comme par exemple être constituée par deux surfaces coniques de conicité inversée.

Conformément à l'invention, le filetage 2 de l'élément femelle est usiné de manière définitive alors que la surface de la butée de limitation de vissage 3 n'a subi qu'un préusinage qui a laissé sur cette butée une surépaisseur de métal qui existe quelles que soient les tolérances d'usinage qui peuvent survenir lors de la fabrication de l'élément femelle.

On voit également sur la figure 2 un calibre mâle 4 qui est muni d'un filetage mâle 5 correspondant au filetage 2 de l'élément femelle, le calibre 4 s'engageant sur le filetage de l'élément femelle sans venir au contact d'aucune autre partie de cet élément femelle de manière à permettre un vissage libre à la main du calibre 4 dans le filetage 2. Le calibre 4 comporte une collerette 6 qui est munie d'un évidement 7 susceptible de recevoir l'extrémité de l'élément femelle. La collerette 6 comporte une échancrure allongée 8 qui permet conformément à l'invention de réaliser un repère 9 sur une génératrice extérieure de l'élément femelle 1.

Ce repère 9 peut être réalisé par marquage à l'aide d'une pointe sèche ou par un trait de peinture ou analogue.

On voit sur la figure 3 l'élément mâle 10 du joint qui est muni d'un filetage externe 11 dont la forme correspond au filetage interne 2 de l'élément femelle. L'élément mâle comporte à son extrémité une butée de limitation de vissage 12.

Conformément à l'invention, on réalise l'usinage définitif du filetage 11 en laissant la surface de la butée de limitation de vissage 12 à l'état préusiné, c'est-à-dire avec un léger excès de métal quelles que soient les tolérances d'usinage pour l'extrémité de l'élément mâle.

On voit également sur la figure 3 un calibre femelle 13 qui est constitué par une bague munie d'un filetage interne 14 correspondant au filetage 11 de l'élément mâle.

Conformément à l'invention, le calibre 13 peut être vissé à la main sur le filetage 11 de l'élément mâle sans être en contact avec l'élément mâle autrement que par le filetage. Le calibre femelle 13 comporte à sa périphérie une échancrure allongée 8 formant repère dont l'emplacement est tel que lorsque le calibre femelle 13 est vissé sur le calibre mâle 4, les deux échancrures 8 sont disposées dans le prolongement l'une de l'autre.

En d'autres termes, les deux échancrures 8 du calibre mâle et du calibre femelle, correspondent à une même génératrice lorsque les deux calibres sont vissés à la main l'un dans l'autre, c'est-à-dire sans couple notable.

On a représenté sur la figure 4 la courbe AA'D'E'F' qui représente le couple qui lors du vissage est absorbé uniquement par la butée du joint en fonction de l'angle de rotation entre l'élément mâle et l'élément femelle. Comme cela a été expliqué au sujet de la figure 1, on constate que lorsque l'extrémité de l'élément mâle arrive contre la butée de limitation de vissage de l'élément femelle, le couple croît très rapidement de manière linéaire en fonction de la rotation, ce qui correspond à la partie AA' de la courbe, après quoi, les déformations plastiques au niveau des butées de limitation de vissage font que la courbe s'infléchit jusqu'un peu au-delà du point E' qui correspond à la destruction des butées de limitation de vissage.

On remarque par contre que si l'on exerce une rotation de l'élément mâle par rapport à l'élément femelle jusqu'au point D', qui correspond à un écrouissage dû à la déformation permanent, des surfaces de butées, lorsque l'on dévisse les deux éléments, puis qu'on les revisse, on obtient une courbe de couple selon ADD'E'F'.

En d'autres termes, on constate que la déformation permanente des butées de limitation de vissage a permis d'accroître l'importance de la partie rectiligne de la courbe DD' lors du vissage ultérieur du joint.

Le procédé selon la présente invention est basé sur l'utilisation de ce phénomène, qui permet d'augmenter l'importance de la partie rectiligne de la courbe du couple. On a représenté sur la figure 5 une vue en demi-coupe d'un mandrin mâle 16 engagé sur un élément femelle 1.

La figure 6 représente une vue en élévation de ce mandrin 16 qui comporte un filetage 17 correspondant au filetage 2 de l'élément femelle, et une surface frontale de travail 18 dont la forme correspond à la forme que doit avoir la butée de limitation de vissage 3 de l'élément femelle.

Ce mandrin est en acier à hautes caractéristiques mécaniques.

Conformément à l'invention, il comporte un repère 19 dont la position a été déterminée à l'aide du calibre femelle 13 vissé à la main sur le mandrin, le repère 19 étant en face de l'encoche 8.

On a représenté sur la figure 7 en demi-coupe un mandrin femelle 20 qui lui aussi est muni d'un filetage interne 21 correspondant au filetage mâle 11 de l'élément mâle, et qui présente une surface de travail 22 en forme d'épaulement dont la forme correspond à celle que doit avoir l'extrémité de l'élément mâle.

La partie externe du mandrin femelle 20 comporte elle aussi un repère 23 qui est dans une position telle que ce repère 23 correspond à la fente 8 du calibre mâle 4 lorsque ce dernier est vissé à la main dans le mandrin femelle.

Conformément à l'invention, l'usinage des mandrins mâle et femelle est tel que la distance L existant sur le mandrin femelle entre la face d'un filet donné 24 au niveau du repère 23 et la surface 22, est égale à la distance L qui existe sur le mandrin mâle entre la même face 24 du même filet au niveau du repère 19 et la surface 18 qui se situe à l'extrémité du mandrin mâle.

En d'autres termes, lorsque le mandrin mâle est vissé sur le mandrin femelle à la main, c'est-à-dire sans couple notable, au moment où les repères 19 et 23 viennent en correspondance, la surface 18 du mandrin mâle vient au contact de la surface 22 du mandrin femelle, et il se produit un début de frettage au niveau de leurs filetages.

On comprend dans ces conditions que lorsque l'on visse à force le mandrin mâle dans l'élément femelle dont la surface de butée de limitation de vissage 3 présente une surépaisseur et que l'on exerce sur le mandrin un couple suffisant pour amener le repère 19 à une distance prédéterminée au-delà du repère 9 qui a été réalisé sur l'élément femelle comme expliqué précédemment, l'on obtient par écrouissage à la fois une augmentation de la dureté et de l'élasticité du métal au voisinage de la surface de limitation de vissage 3 et un positionnement exact de cette surface par rapport au filetage.

On conçoit également que l'on obtient le même résultat sur l'élément mâle dont la surface d'extrémité a simplement été préusinée lorsque l'on visse le mandrin femelle 20 sur l'extrémité de cet élément et que par un couple suffisant on amène le repère 23 du mandrin à une distance prédéterminée au-delà du repère 15 de l'élément mâle.

La distance prédéterminée qui correspond au décalage entre le repère du mandrin et celui de l'élément tubulaire est fonction de l'importance du frettage que l'on désire avoir au niveau des filetages sur le joint serré, le frettage étant d'autant plus important que cette distance est grande.

On voit que conformément à l'invention on a l'avantage à l'aide d'un moyen simple et efficace d'améliorer les caractéristiques mécaniques du joint et également de positionner d'une manière précise les surfaces de limitation de vissage par rapport aux filetages et ceci malgré les tolérances de fabrication.

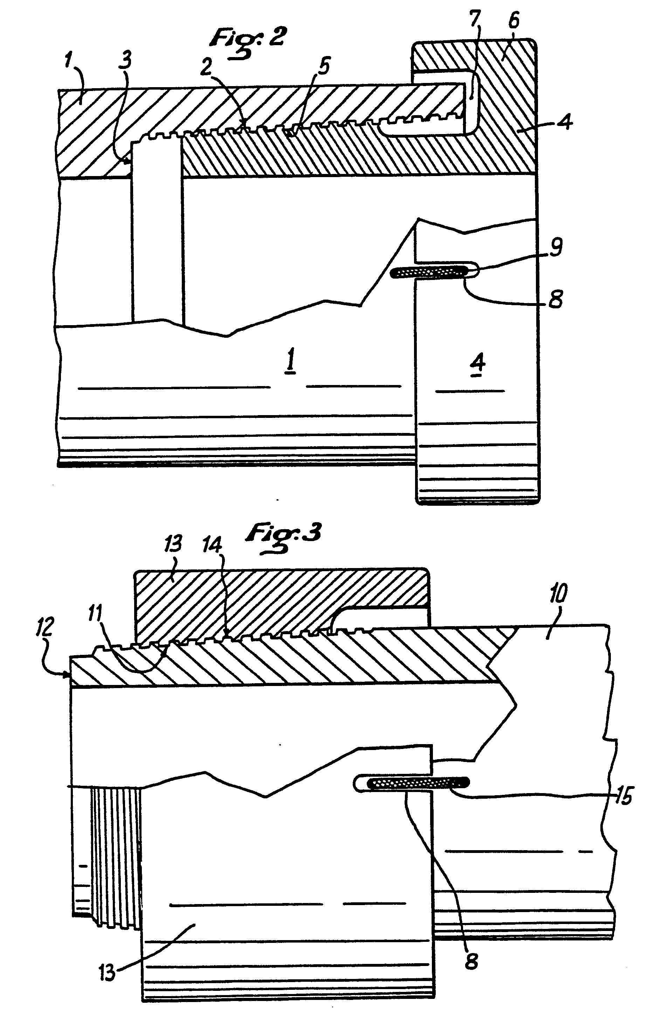

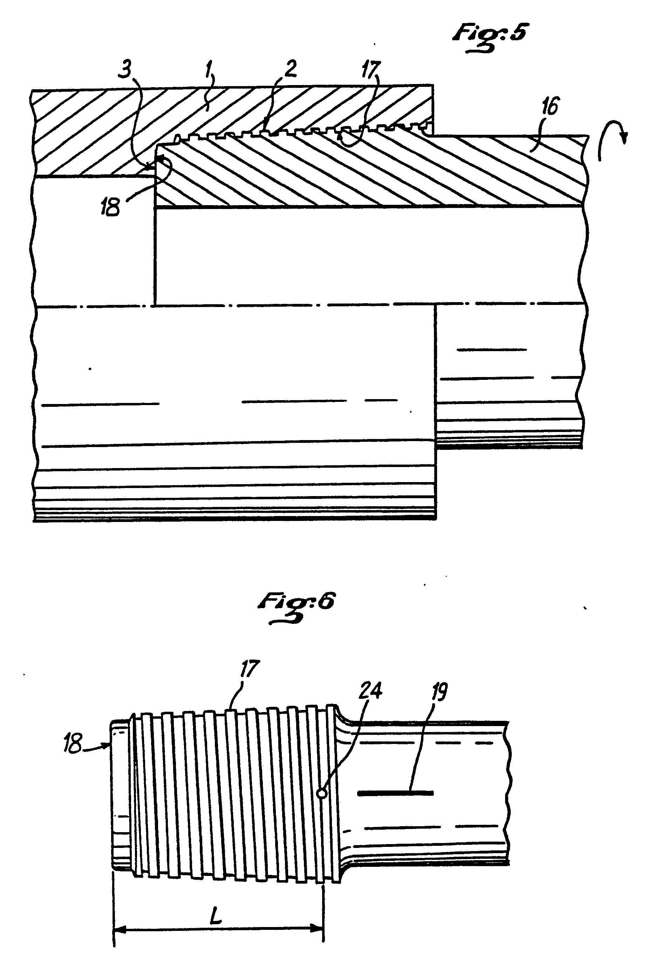

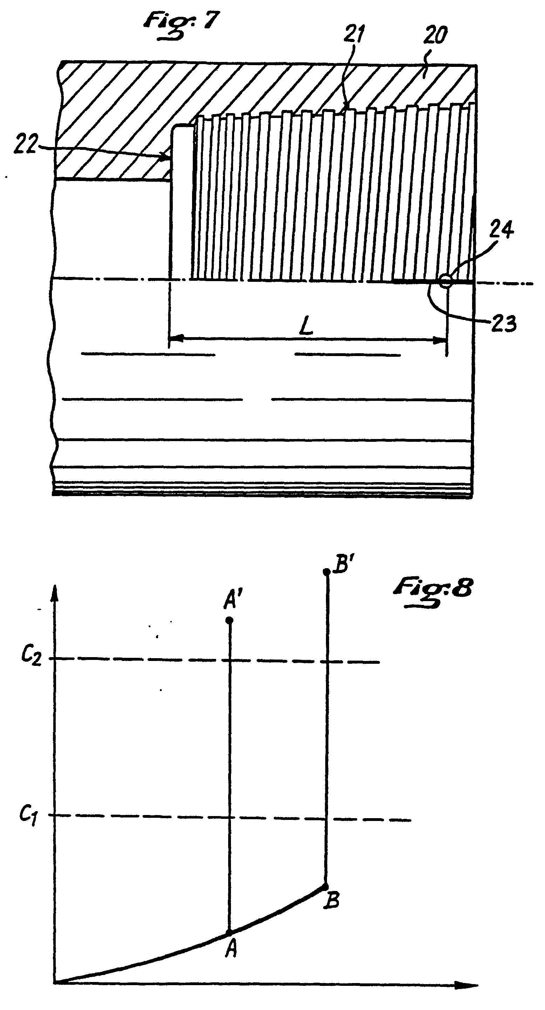

On a représenté sur la figure 8 les courbes de couples correspondant à la figure 1 dans le cas de joints fabriqués conformément à l'invention.

On remarque que les parties linéaires AA' et BB' sont plus grandes que dans le cas de la figure 1 qui correspond à des joints actuellement connus. Cela est dû à l'augmentation des efforts qui peuvent être supportés par les butées de limitation de vissage.

De plus, comme conformément à l'invention, les surfaces de limitation de vissage sont positionnées avec beaucoup plus de précisions par rapport aux filetages, les points A et B se trouvent plus rapprochés l'un de l'autre, de sorte que les couples correspondant aux points A et B sont plus voisins l'un de l'autre.

Il résulte de tout cela, qu'il est possible de choisir une zone de couples C1, C2 qui est nettement plus importante qu'avec les joints selon l'état de la technique, et ceci, tout en assurant un effort axial sur les butées de limitation de vissage plus important et une meilleure sécurité vis-à-vis des vissages excessifs.

**Revendications**

1. Joint fileté pour tubes d'acier, destiné notamment à être utilisé dans l'industrie pétrolière, du type comportant un élément femelle (1) muni d'un filetage tronconique (2) interne à l'extrémité duquel se trouve située une butée de limitation de vissage (3), et un élément mâle (10) muni à son extrémité d'un filetage tronconique externe (11) correspondant à celui de l'élément femelle et d'une butée de limitation de vissage (12) dont la forme correspond à celle de l'élément femelle (1), caractérisé par le fait que les butées (12 et 3) de l'élément mâle (10) et de l'élément femelle (1) ont chacune été usinées par déformation à froid et écrouissage à l'aide d'un outil (16, 20) muni d'un filetage (17, 21) susceptible de s'engager dans ou sur les filetages (2, 11) de l'élément correspondant.

2. Procédé pour la fabrication du joint selon la revendication 1, caractérisé par le fait que l'on procède à un premier usinage de l'élément mâle et de l'élément femelle du joint en procédant à l'usinage de finition des filetages (2,11) et en conservant seulement à l'état ébauché les surfaces de butée de limitation de vissage (3,12); que l'on engage un calibre fileté mâle (6) sur le filetage (2) de l'élément femelle et un calibre fileté femelle (13) sur le filetage (11) de l'élément mâle, ces deux calibres étant chacun muni d'un repère (8) disposé de telle manière que lorsque ces deux calibres filetés sont vissés à la main l'un dans l'autre les deux repères (8) en question sont situés sur une même génératrice; que l'on reporte sur l'élément femelle (1) du joint le repère (8) du calibre mâle et l'on reporte sur l'élément mâle (10) le repère (8) du calibre femelle; que l'on engage dans l'élément femelle (1) un mandrin fileté mâle (16) en acier à hautes caractéristiques mécaniques, ce mandrin ayant à son extrémité la forme que doit avoir la butée de limitation de vissage (3) de l'élément femelle (1) et ledit mandrin mâle (16) étant muni sur sa périphérie d'un repère (19) correspondant au repère (8) du calibre femelle (13) précité lorsque ce dernier est engagé et vissé à la main sur ledit mandrin; qu'à l'aide d'une machine susceptible d'exercer un couple élevé, on entraîne le mandrin fileté mâle (16) en rotation par rapport à l'élément femelle (1) du joint de manière à amener sur une même génératrice le repère (19) du mandrin à une distance prédéterminée au-delà du repère (9) de l'élément femelle (1) en écrouissant la surface constituant la butée de limitation de vissage (3) de l'élément femelle (1) à l'aide de l'extrémité du mandrin mâle; (16) que l'on dévisse le mandrin mâle (16) de l'élément femelle (1); et que l'on réalise sur l'élément mâle (10) une opération de même nature à l'aide d'un mandrin femelle (20) qui est muni d'un repère (23) correspondant à celui (8) du calibre mâle (4) précité et qui est vissé à force sur l'extrémité de l'élément mâle (10) jusqu'à ce que le repère (23) du mandrin (20) soit amené à une distance prédéterminée au-delà du repère (15) de l'élément mâle (10).

3. Outillage pour mettre en oeuvre le procédé selon la revendication 2, caractérisé par le fait que cet outillage est constitué par un calibre mâle (4) et un calibre femelle (13), munis de filetages (5, 14) susceptibles de s'engager sur les filetages de l'élément femelle (1) et de l'élément mâle (10) du joint, chacun de ces calibres comportant un repère (9,15) disposé de manière telle que lorsque les deux calibres (4, 13) sont vissés manuellement l'un sur l'autre ces deux repères (9, 15) se trouvent sur une même génératrice, ledit outillage comportant en outre un mandrin mâle (16) et un mandrin femelle (20) comportant des filetages (17, 21) et des surfaces de travail (18,22) correspondant aux filetages (2,11) et aux surfaces de butées de limitation de vissage (3,12) de l'élément mâle (10) et de l'élément femelle (1), chacun de ces mandrins étant muni d'un repère (19,23) disposé de telle manière que lorsque le mandrin mâle (16) est vissé dans le calibre femelle (13) précité, et lorsque le mandrin femelle (20) est vissé sur le calibre mâle (14) précité, les repères des calibres (9,15) et des mandrins (19,23) se trouvent sur une même génératrice.

**Patentansprüche**

1. Gewindeverbindung für Stahlrohre, insbesondere für die Verwendung in der Erdölindustrie, bestehend aus einem Mutterelement (1) mit konischem Innengewinde (2), an dessen Ende ein Einschraubbegrenzungsanschlag (3) vorgesehen ist, und aus einem Bolzenelement (10), das an seinem Ende ein dem Gewinde des Mutterelementes entsprechendes konisches Außengewinde (11) und einen Einschraubbegrenzungsanschlag (12) aufweist, dessen Form der des Mutterelementes (1) entspricht, dadurch gekennzeichnet, daß der Einschraubbegrenzungsanschlag (12) des Bolzenelementes (10) und der Einschraubbegrenzungsanschlag (3) des Mutterelementes (1) zur Kaltverformung und Verpressung mit Werkzeugen (16, 20) bearbeitet werden, die Gewinde (17, 21) aufweisen, die in oder auf den Gewinden (2, 11) des zugeordneten Elementes eingreifen.

2. Verfahren zum Herstellen einer Verbindung nach Anspruch 1, dadurch gekennzeichnet, daß eine erste Vorbearbeitung des Bolzen- und Mutterelementes der Verbindung durchgeführt wird, indem die Gewinde fertigbearbeitet, die Einschraubbegrenzungsflächen (3, 12) hingegen im Rohzustand belassen werden, daß man ein mit Gewinde versehenes Bolzenkaliber (6) in das Gewinde (2) des Mutterelementes (13) und ein mit Gewinde versehenes Mutterkaliber (13) auf das Gewinde (11) des Bolzenelementes aufschraubt, daß diese Kaliber beide mit einer Marke (8) versehen sind, die so angeordnet sind, daß, wenn die beiden Gewindekaliber miteinander von Hand verschraubt werden, die beiden Marken auf derselben Erzeugenden liegen, daß dann auf dem Mutterelement (1) der Verbindung die Marke (8) des Bolzenkalibers und auf dem Bolzenelement (10) die Marke (8) des Mutterkalibers aufgetragen wird, daß dann in das Mutterelement ein Bolzendorn (16) aus Stahl mit hochwertigen mechanischen Eigenschaften eingeschraubt wird, wobei der Dorn an seinem Ende die Form aufweist, welche der Einschraubbegrenzungsanschlag (3) des Mutterelementes (1) erhalten soll und am Umfange des Bolzendorns (16) eine Marke (19) vorgesehen ist, die der Marke (8) des Mutterkalibers (13) entspricht, wenn das letztere von Hand auf den Bolzendorn aufgeschraubt wird, daß mit Hilfe einer Maschine, mit der große Drehmomente ausgeübt werden können, der mit Gewinde versehene Bolzendorn (16) relativ zum Mutterelement (1) der Verbindung soweit gedreht wird, daß die Marke (19) des Bolzendorns auf der gleichen Erzeugenden um einen vorbestimmten Abstand über die Marke (9) des Mutterelementes (1) hinaus versetzt wird und dabei die Fläche, welche den Einschraubbegrenzungsanschlag (3) des Mutterelementes (1) bildet, mittels des Endes des Bolzendornes (16) kalt verformt wird, daß man den Bolzendorn (16) aus dem Mutterelement (1) herausschraubt und daß man das Bolzenelement (10) der Verbindung einem entsprechenden Verfahrensgang mittels eines Mutterdornes (20) unterzieht, der mit einer Marke (23), die der Marke (8) des Bolzenkalibers (4) entspricht, versehen ist und der mit Kraftanzug um das Ende des Bolzenelementes aufgeschraubt wird, bis die Marke (23) des Mutterdornes (20) um einen vorbestimmten Abstand über die Marke (15) des Bolzenelementes (10) hinaus verdreht ist.

3. Werkzeugsatz für die Durchführung des Verfahrens nach Anspruch 2, dadurch gekennzeichnet, daß er aus einem Bolzenkaliber (4) und einem Mutterkaliber (13) besteht, die mit Gewinden (5, 14) versehen sind, welche in Gewinde des Bolzenelementes (10) und des Mutterelementes (1) der Verbindung einschraubbar sind, wobei jedes der beiden Kaliber eine Marke (9, 15) aufweist, die so angeordnet sind, daß, wenn die beiden Kaliber (4, 15) von Hand miteinander verschraubt sind, die beiden Marken (9, 15) sich auf ein und derselben Erzeugenden befinden, daß der Werkzeugsatz außerdem einen Bolzendorn (16) und einen Mutterdorn (20) aufweist, die Gewinde (17, 21) und Arbeitsflächen (18, 22) tragen, welche den Gewinden (2, 11) und den Oberflächen der Einschraubbegrenzungsanschläge (3, 12) des Bolzenelementes (10) und des Mutterelementes (1) entsprechen, und daß jeder der beiden Dorne mit einer Marke (19, 23) versehen ist, wobei deren Anordnung so erfolgt, daß, wenn der Bolzendorn (16) in das Mutterkaliber (13) und der Mutterdorn (20) in das Bolzenkaliber (4) eingeschraubt ist, die Marken (9, 15) der Kaliber und die Marken (19, 23) der Dorne sich auf ein und derselben Erzeugenden befinden.

## Claims

1. A screwed joint for steel tubes, intended in particular for being employed in the oil industry and of the type which includes one female member (1) equipped with a frustoconical internal thread (2) at the end of which there is situated a stop (3) for limitation of the screwing home, and one male member (10) equipped at the end of it with an external frustoconical thread (11) corresponding with that in the female member and with a stop (12) for limitation of the screwing home, the shape of which corresponds with that on the female member (1), characterized by the fact that the stops (12 and 3) on the male member (10) and on the female member (1) have each been machined by deformation cold and cold-working by means of a tool (16, 20) equipped with a thread (17, 21) capable of engaging in or over the threads (2, 11) on the corresponding member.

2. A method of manufacture of the joint as in Claim 1, characterized by the fact that one proceeds to a first machining of the male member and of the female member of the joint by proceeding to the finish-machining of the threads (2, 11) and by preserving only at the rough state the stop surfaces (3, 12) for limitation of the screwing home, that a male threaded gauge (6?-4?) is engaged in the thread (2) in the female member and a female threaded gauge (13) over the thread (11) on the male member, these two gauges being each equipped with a reference mark (8) arranged in such a way that when these two threaded gauges are screwed by hand into one another the two reference marks (8) in question are situated upon one and the same generatrix, that one transfers onto the female member (1) of the joint the reference mark (8) from the male gauge and one transfer onto the male member (10) the reference mark (8) from the female gauge that a male threaded mandrel (16) of steel of high mechanical characteristics is engaged in the female member (1), this mandrel having at the end of it the shape which the stop (3) for limitation of screwing home the female member (1) should have and the said male mandrel (16) being equipped on its periphery with a reference mark (19) corresponding with the reference mark (8) on the aforesaid female gauge (13) when the latter is engaged and screwed by hand onto the said mandrel, that by means of a machine capable of exerting a high torque the male threaded mandrel (16) is driven in rotation with respect to the female member (1) of the joint so as to bring on one and the same generatrix the reference mark (19) on the mandrel to a predetermined distance beyond the reference mark (9) on the female member (1) by cold-working the surface forming the stop (3) for limitation of screwing home of the female member (1) by means of the end of the male mandrel (16), that the male mandrel (16) is unscrewed from the female member (1), and that on the male member (10) an operation of the same nature is effected by means of a female mandrel (20) which is equipped with a reference mark (23) corresponding with that (8) on the aforesaid male gauge (4) and which is screwed forcefully onto the end of the male member (10) until the reference mark (23) on the mandrel (20) has been brought to a predetermined distance beyond the reference mark (15) on the male member (10).

3. A set of tools for putting into effect the method as in Claim 2, characterized by the fact that this set of tools consists of one male gauge (4) and one female gauge (13) equipped with threads (5, 14) capable of being engaged with the threads in the female member (1) and on the male member (10) of the joint, each of these gauges including a reference mark (9, 15) arranged in such a way that when the two gauges (4, 13) are screwed by hand onto one another these two reference marks (9, 15) lie on one and the same generatrix, the said set of tools including in addition one male mandrel (16) and one female mandrel (20) having threads (17, 21) and working surfaces (18, 22) corresponding with the threads (2, 11) and with the stop surfaces (3, 12) for limitation of the screwing home on the male member (10) and in the female member (1), each of these mandrels being equipped with a reference mark (19, 23) arranged in such a way that when the male mandrel (16) is screwed into the aforesaid female gauge (13) and when the female mandrel (20) is screwed onto the aforesaid male gauge (4) the reference marks on the gauges (9, 15) and on the mandrels (19, 23) lie on one and the same generatrix.

# Fig.1

# Fig.4

**Fig. 2**

1  3  2  5  7  6

4

9

8

_1_  _4_

**Fig. 3**

13  14  10

12  11

15

8

13  8

0 159 242

*Fig:5*

*Fig:6*

5

0 159 242

*Fig. 7*

21  20

22

24

23

L

*Fig. 8*

B'

A'

$C_2$

$C_1$

B

A

7